# EUROPÄISCHE PATENTANMELDUNG

(11) **EP 4 177 630 A1**
(43) Veröffentlichungstag der Anmeldung: **10.05.2023**
(21) Anmeldenummer: 22020528.0
(22) Anmeldetag: 02.11.2022
(51) Int. Cl.: G01S 7/41, G01S 13/86, G01S 13/88

(54) **VERFAHREN UND VORRICHTUNG ZUR BESTIMMUNG DER ZUSAMMENSETZUNG EINES GESCHICHTETEN SCHNEEPROFILS**

(30) Priorität: 04.11.2021 AT 508702021
(71) Anmelder: Muralter, Florian, 8580 Köflach (AT)
(72) Erfinder: Muralter, Florian, 8580 Köflach (AT)

(57) **Zusammenfassung**

Computerimplementiertes Verfahren zur Bestimmung der Zusammensetzung eines geschichteten Schneeprofils (1) mit einer, über einer Schneedecke angeordneten Radareinheit (3), umfassend die folgenden Schritte, Senden, durch die Radareinheit, eines Sendesignals (4), in die Schneedecke (2), Empfangen, durch die Radareinheit, eines ersten Reflexionssignals (5) und eines zweiten Reflexionssignals (6), Bilden, durch die Radareinheit, von aggregierten Radarmessdaten (7) umfassend die Signale, Übermitteln, durch die Radareinheit, der Radarmessdaten an eine Datenverarbeitungseinheit (8), Berechnen, durch Anwendung digitaler Signalverarbeitungsalgorithmen in der Datenverarbeitungseinheit, von Radarprofildaten (9) aus den Radarmessdaten, Bestimmen, durch die Datenverarbeitungseinheit, der Zusammensetzung des Schneeprofils auf Grundlage der Radarprofildaten, wobei die Reflexionssignale gleichzeitig durch zumindest drei örtlich getrennte Empfangsantennen empfangen werden.

## Beschreibung

Die Erfindung betrifft ein Verfahren und eine Vorrichtung zur Bestimmung der Zusammensetzung eines geschichteten Schneeprofils.

Die Zusammensetzungen von geschichteten Schneeprofilen, also deren Aufbau in Schichten mit Eigenschaften wie Schneehärte, Schneedichte, Schneekorngrößen sowie weitere wesentliche Charakteristika eines Schneeprofils sind von erheblicher Bedeutung, um im Alpinwesen Gefahren wie die Wahrscheinlichkeit einer abgehenden Lawine zu beurteilen. Im Alpinwesen ist es daher üblich, Schneegrabungen durchzuführen und die gegrabenen Proben auszuwerten, um relevante Informationen eines Schneeprofils zu erhalten. Grabungen erfordern jedoch erheblichen personellen Aufwand, der riskant ist und reduziert werden soll, sodass es bekannt ist, Informationserhebungen für Härteprofile durch Radarmessungen durchzuführen. Ferner können derartige Radargeräte auch genutzt werden, um von Lawinen verschüttete Menschen oder Tiere aufzuspüren, da sie auch dazu ausgebildet sind, schneefremde Objekte in einem Schneeprofil zu detektieren.

Radargeräte für Schneeprofile sind im Stand der Technik bekannt und dazu ausgebildet, mit einer Sendeantenne ein Signal zu senden und mit einer Empfangsantenne ein reflektiertes Signal zu empfangen.
Bekannte Systeme haben jedoch den Nachteil, dass das Empfangssignal oftmals verrauscht ist, durch die Unschärfe wesentliche Charakteristika einer Schneedecke mit begrenzter Genauigkeit auflösbar sind und lediglich wenige wesentliche Charakteristika durch konstruktionsgemäße Gegebenheiten messbar sind. Insbesondere wird das Empfangssignal auch in verrauschter Weise empfangen, weil sich im Zuge der radartechnischen Messung durch die Reflexion, Beugung und/oder Streuung des Sendesignals an Schneekristallen der systematische Messfehler des Sendesignals fortpflanzt.

Somit sind bekannte Radarsysteme in lediglich beschränkter Weise dazu geeignet, konventionelle Grabungen zu ersetzen.

Die Publikation "Snowpack Monitoring using a Dual-Receiver Radar Architecture" (Pasian et al., IEEE Transactions on Geoscience and Remote Sensing, Vol. 57, No. 2, 2019-02-01, pages 1195 - 1204. doi:10.1109/TGRS.2018.2865180) offenbart eine Radar-Architektur zur Bestimmung der Zusammensetzung eines geschichteten Schneeprofils, welche eine Sende- und zwei Empfangsantennen umfasst, die örtlich getrennt entlang einer Richtung angeordnet sind. Durch die Verwendung von zwei Empfangsantennen können die Schneehöhe und die Wellengeschwindigkeit im Medium simultan identifiziert werden. Eine zweidimensionale Bestimmung des Schneeprofils ist durch diese Radar-Architektur jedoch nicht möglich, weshalb wesentliche Charakteristika wie beispielsweise die Größe von Schneekörnern nicht ermittelt werden können.

Die Aufgabe der Erfindung besteht somit darin, diese und andere Probleme zu lösen und ein computerimplementiertes Verfahren und eine Vorrichtung zur Bestimmung der Zusammensetzung eines geschichteten Schneeprofils zu schaffen, das mit erhöhter Genauigkeit Charakteristika eines Schneeprofils vermessen kann und die Messdaten des Schneeprofils mit umfassendem Informationsgehalt, insbesondere mit Informationen über weitere Charakteristika des Schneeprofils bestimmen kann.

Der Ausdruck Charakteristika einer Schneedecke umfasst dabei nicht nur die Härte und Tiefe eines Schneeprofils, sondern vielmehr all jene vielartigen charakterisierenden Merkmale von Schnee, die im Alpinwesen auch durch Schneegrabungen feststellbar sind sowie insbesondere für die Beurteilung der Lawinengefahr relevant sind. Der Begriff Schneeprofil bedeutet im Zusammenhang mit der Erfindung, dass Schneecharakteristika in Abhängigkeit der Tiefe mit einer Tiefenreferenz zur Schneedeckenoberfläche bestimmt werden. Üblicherweise ist die Zusammensetzung eines Schneeprofils geschichtet, da die veränderlichen klimatischen Bedingungen oft zu einer insgesamt inhomogenen Zusammensetzung des Schneeprofils jedoch mit schichtweisen homogenen Zonen führen. Beispielsweise kann Neuschnee lediglich an der Oberfläche schmelzen und später erneut frieren und bei erneutem Schneefall eine weitere Schneeschicht gebildet werden. Derartig klimatisch veränderliche Vorgänge können zu komplex strukturierten Schneeprofilen führen, deren Zusammensetzung radartechnisch besonders schwierig zu bestimmen ist.

Diese und andere Aufgaben werden durch ein computerimplementiertes Verfahren und durch eine Vorrichtung mit den Merkmalen der unabhängigen Ansprüche gelöst.

Ein computerimplementiertes Verfahren ist zur Bestimmung der Zusammensetzung eines geschichteten Schneeprofils mit einer über einer Schneedecke angeordneten Radareinheit ausgebildet und umfasst die folgenden Schritte:
In einem ersten Schritt erfolgt das Senden eines Sendesignals in die Schneedecke durch die Radareinheit. Das Sendesignal kann als analoges elektromagnetisches Signal, insbesondere als Radarsignal ausgebildet sein, das moduliert, bevorzugt frequenzmoduliert oder amplitudenmoduliert oder kontinuierlich ist. Bevorzugt umfasst die Radareinheit ein FMCW-, ein CW- oder ein Puls-Radar. Dabei kann das Sendesignal eine transversale Welle oder eine Überlagerung mehrerer transversalen Wellen sein.

Vorzugsweise erfolgt das Senden rechtwinkelig zur Schneedecke, gegebenenfalls in einem Winkel von 70° bis 110°, bevorzugt in einem Winkel von 85° bis 95°. Gegebenenfalls kann die Radareinheit auch mehr als ein, bevorzugt zwei, insbesondere vier, Sendesignale emittieren.

In einem weiteren Schritt erfolgt das Empfangen eines ersten Reflexionssignals und eines zweiten Reflexionssignals durch die Radareinheit. Gegebenenfalls kann die Radareinheit auch mehr als zwei, insbesondere vier, Reflexionssignale empfangen. Die Reflexionssignale sind Signale, die von der Radareinheit in die Schneedecke gesendet und folglich reflektiert, gebeugt und/oder gestreut werden. Dabei können die Reflexionssignale verrauschte transversale Wellen oder Überlagerungen von verrauschten transversalen Wellen sein.

In einem weiteren Schritt erfolgt das Bilden von aggregierten Radarmessdaten durch die Radareinheit, umfassend das Sendesignal, das erste Reflexionssignal und das zweite Reflexionssignal.

Gegebenenfalls erfolgt die Bildung der aggregierten Radarmessdaten durch eine Signalverarbeitungseinheit mit einem Analog-Digital-Wandler und insbesondere mit einem nach dem Analog-Digital-Wandler geschalteten Digital-Filter oder mit einem vor dem Analog-Digital-Wandler geschalteten Analog-Filter. Gegebenenfalls werden die aggregierten Radarmessdaten nach einer digitalen Fourier-Transformation, insbesondere nach einer schnellen digitalen Fourier-Transformation im Frequenzbereich gebildet. Gegebenenfalls werden die Signale auch ohne Transformation im Zeitbereich gebildet oder werden von der Radareinheit signaltechnisch direkt im Frequenzbereich erfasst.

In einem weiteren Schritt erfolgt das Übermitteln der Radarmessdaten durch die Radareinheit an eine Datenverarbeitungseinheit. Gegebenenfalls ist die Datenverarbeitungseinheit örtlich getrennt von der Radareinheit. Die Datenverarbeitungseinheit kann auch gemeinsam mit der Radareinheit als eine gemeinsame Einheit gebildet sein.

In einem nächsten Schritt erfolgt das Berechnen durch Anwendung digitaler Signalverarbeitungsalgorithmen in der Datenverarbeitungseinheit von Radarprofildaten aus den Radarmessdaten. Die Signalverarbeitungsalgorithmen können Algorithmen der digitalen Signalverarbeitung wie Filterung, insbesondere schnelle, digitale Fourier-Transformationen oder auch anwendungsspezifische Algorithmen zur Erkennung von Schichten sein, sodass die Radarprofildaten nach Schichten aufgeteilt werden können.

In einem zusätzlichen Schritt erfolgt das Bestimmen der Zusammensetzung des Schneeprofils durch die Datenverarbeitungseinheit auf Grundlage der Radarprofildaten. Gegebenenfalls sind die Bestimmungsalgorithmen dazu ausgebildet, auf Grundlage der Radarprofildaten die Dielektrizitätskonstanten des Schneeprofils in Abhängigkeit der Tiefe des Schneeprofils zu bestimmen und gegebenenfalls dazu ausgebildet, daraus weitere Charakteristika zu errechnen. Gegebenenfalls sind die Bestimmungsalgorithmen auch dazu ausgebildet, auf Grundlage der Radarprofildaten Charakteristika des Schneeprofils direkt ohne eine vorhergehende Zwischenbestimmung der Dielektrizitätskonstanten des Schneeprofils in Abhängigkeit der Tiefe des Schneeprofils zu errechnen.
Die Bestimmungsalgorithmen können von einer Datenbank oder einem Speicher bereitgestellt werden; die Bestimmung kann aber auch durch ein entsprechend trainiertes Neuronales Netz erfolgen.

Erfindungsgemäß werden die Reflexionssignale gleichzeitig durch zumindest drei örtlich getrennte Empfangsantennen empfangen. Dadurch wird erreicht, dass Radarmessdaten unterschiedlichen Messpositionsursprungs gebildet werden können und mit unterschiedlichen Empfangsantennendaten bei bekanntem Abstand der Empfangsantennen zueinander verschiedenartige stochastische Operationen, insbesondere Heuristiken, durchgeführt werden können, die das Ausmaß von Beugungs- und Streueffekten in der Schneedecke lokal schätzen.

Beispielsweise können auf Basis der Empfangsantennendaten Kovarianz-Funktionen gebildet werden, die gegebenenfalls nach weiteren algorithmischen Operationen schätzen, wie stark das Sendesignal in der Schneedecke lokal gestreut oder gebeugt wird, um in weiterer Folge eine statistische Korrelation zwischen den Empfangsantennendaten und den Schneekorndurchmessern im Schneeprofil oder andersartigen Charakteristika des Schneeprofils zu errechnen. Das Signifikanzniveau der Schätzungen steigt mit der Auflösung der Empfangsantennendaten und somit mit dem Volumen der Radarmessdaten. Insbesondere bei frequenzmodulierten Sendesignalen können aufgrund der Überlagerung mehrerer Wellen unterschiedlicher Wellenlänge signifikante Schätzungen errechnet werden, insbesondere signifikante Berechnungen für die Zusammensetzung der Schneekorndurchmesser im Schneeprofil, da dominante Beugungs- und Streueffekte entsprechender Wellenlängen mit entsprechenden Schneekorndurchmessern korrelieren.

Erfindungsgemäß ist vorgesehen, dass die Empfangsantennen örtlich getrennt sind und entlang einer ersten Richtung, insbesondere der y-Richtung, und entlang einer zweiten Richtung, insbesondere der x-Richtung, voneinander beabstandet sind.

Gegebenenfalls ist vorgesehen, dass die Datenverarbeitungseinheit aus den Radarmessdaten separate Schichten des Schneeprofils extrahiert und die Radarprofildaten entsprechend der extrahierten Schichten in Abschnitte gliedert.

Dadurch wird ein zweistufiger Verarbeitungsprozess geschaffen, wobei die Radarmessdaten zunächst räumlich und schichtweise dem Schneeprofil zugeordnet werden und in einem zweiten Schritt dem Auswertealgorithmus für die Berechnung der Charakteristika des Schneeprofils sequenzielle Radarmessdaten in geordneter Weise zugeführt werden. Bevorzugt sind die Signalverarbeitungsalgorithmen dazu geeignet, einen derartigen räumlichen Bezug zwischen den digitalen Radarmessdaten und den Schichten des vermessenen Schneeprofils, insbesondere den Schichthöhen und der Gesamthöhe des Schneeprofils mit einer Referenz zur Schneedeckenoberfläche herzustellen. Insbesondere sind die Signalverarbeitungsalgorithmen dazu geeignet, die schichtweise Struktur des Schneeprofils zu bestimmen und somit die Abschnittsdaten oder die sequenziellen Radarmessdaten der extrahierten Schichten in die Radarprofildaten einzubinden oder die Radarprofildaten in diese umzuwandeln.

Ferner kann vorgesehen sein, dass die Bestimmung der Zusammensetzung des Schneeprofils durch ein Neuronales Netz erfolgt, wobei das Neuronale Netz auf Grundlage der Radarprofildaten korrespondierende, insbesondere geschichtete Schneeprofildaten des Schneeprofils liefert. Dadurch wird erreicht, dass alternativ zu stochastischen Methoden auf Basis der Radarprofildaten eine Methode zur Bestimmung der Charakteristika eines Schneeprofils bereitgestellt wird.

Zudem kann vorgesehen sein, dass zum Trainieren des Neuronalen Netzes Probendaten bekannter Schneeprofile in Verbindung mit Radarprofildaten dieser bekannten Schneeprofile als Trainingsdaten verwendet werden, wobei die Probendaten vorzugsweise von einem externen Probendatenserver abgerufen werden. Dadurch wird ein Algorithmus gebildet, der alternativ zu stochastischen Methoden auf Basis von Radarprofildaten eine Methode zur Bestimmung der Charakteristika eines Schneeprofils ermöglicht. Zudem wird eine Möglichkeit geschafften, die Radarprofildaten dezentral auszuwerten.

Gegebenenfalls umfassen die Probendaten und Schneeprofildaten Daten über die Kornform, Härte, den Rammwiderstand, die Temperatur, den Feuchtegrad und/oder den durchschnittlichen Schneekorndurchmesser der Schichten des Schneeprofils. Dadurch wird eine weitreichende Berechnungsbasis geschaffen, um insbesondere die Gefahr eines Lawinenabgangs einschätzen zu können.

Gegebenenfalls kann die Datenverarbeitungseinheit durch Abfrage eines Positionssensors, vorzugsweise eines GPS-Moduls, ihre aktuelle geographische Position feststellt, worauf die Probendaten für diese Position abgerufen werden. Dadurch wird erreicht, dass dem Neuronale Netz automatisiert die der Position entsprechenden Probendaten bei der Verarbeitung der Radarprofildaten bereitgestellt werden können.

Erfindungsgemäß ist ein computerlesbares Speichermedium vorgesehen, umfassend Anweisungen, die einen Computer zur Ausführung des Verfahrens veranlassen.

Erfindungsgemäß ist eine Vorrichtung zur Bestimmung der Zusammensetzung eines geschichteten Schneeprofils umfassend eine über einer Schneedecke angeordnete Radareinheit und eine Datenverarbeitungseinheit vorgesehen. Die Radareinheit ist dazu ausgebildet, ein Sendesignal in die Schneedecke zu senden und ein erstes Reflexionssignal sowie ein zweites Reflexionssignal zu empfangen. Ferner ist die Radareinheit dazu ausgebildet, aggregierte Radarmessdaten umfassend aller Sendesignale und Reflexionssignal zu bilden und die Radarmessdaten an die Datenverarbeitungseinheit zu übermitteln. Die Datenverarbeitungseinheit ist dazu ausgebildet, durch Anwendung digitaler Signalverarbeitungsalgorithmen Radarprofildaten aus den Radarmessdaten zu berechnen und die Zusammensetzung des Schneeprofils auf Grundlage der Radarprofildaten zu bestimmen. Die Radareinheit weist zumindest zwei örtlich getrennte Empfangsantennen auf, um die Reflexionssignale gleichzeitig zu empfangen. Dadurch wird eine Vorrichtung bereitgestellt, die die erforderlichen Daten zur Durchführung des erfindungsgemäßen computerimplementieren Verfahrens erfassen und die erfindungsgemäßen Schritte ausführen kann.

Gegebenenfalls ist vorgesehen, dass die Datenverarbeitungseinheit dazu ausgebildet ist, aus den Radarmessdaten separate Schichten des Schneeprofils zu extrahieren und die Radarprofildaten entsprechend der extrahierten Schichten in Abschnitte zu gliedern.
Dadurch wird die Möglichkeit eines zweistufigen Verarbeitungsprozesses geschaffen, wobei in einem ersten Schritt die sequenziellen Radarmessdaten zunächst räumlich und schichtweise dem Schneeprofil zugeordnet werden können und in einem zweiten Schritt dem Auswertealgorithmus für die Berechnung der Charakteristika des Schneeprofils sequenzielle Radarmessdaten in geordneter Weise zugeführt werden. Dadurch wird der Berechnungsaufwand für die Datenverarbeitung erheblich reduziert.

Bevorzugt ist vorgesehen, dass die Datenverarbeitungseinheit mit einem Neuronalen Netz in Verbindung steht oder dieses umfasst, wobei das Neuronale Netz dazu trainiert ist, auf Grundlage der Radarprofildaten korrespondierende, insbesondere geschichtete Schneeprofildaten des Schneeprofils zu liefern. Dadurch wird erreicht, dass alternativ zu stochastischen Methoden auf Basis von Radarprofildaten die Charakteristika eines Schneeprofils berechnet werden können.

Ferner kann vorgesehen sein, dass die Datenverarbeitungseinheit mit einem vorzugsweise externen Probendatenserver in Verbindung steht und dazu ausgebildet ist, Probendaten bekannter Schneeprofile vom Probendatenserver abzurufen und in Verbindung mit Radarprofildaten dieser bekannten Schneeprofile zum Trainieren des Neuronalen Netzes zu verwenden. Dadurch wird eine Datenfusion durchgeführt, die den Trainingsprozess des Neuronalen Netzes beschleunigt.

Zudem können die Probendaten und die Schneeprofildaten Daten über die Schneekornform, die Härte, den Rammwiderstand, die Temperatur, den Feuchtegrad und/oder den durchschnittlichen Schneekorndurchmesser der Schichten des Schneeprofils umfassen. Dadurch wird eine weitreichende Berechnungsbasis geschaffen, um die Gefahr eines Lawinenabgangs zu beurteilen.

Gegebenenfalls ist vorgesehen, dass die Datenverarbeitungseinheit mit einem Positionssensor, insbesondere mit einem GPS-Modul, in Verbindung steht und dazu ausgebildet ist, ihre aktuelle geographische Position festzustellen und die Probendaten für diese Position abzurufen. Dadurch wird erreicht, dass dem Neuronale Netz automatisiert die entsprechenden Probendaten bei der Verarbeitung der Radarprofildaten bereitgestellt werden können.

Insbesondere kann vorgesehen sein, dass die Radareinheit dazu ausgebildet ist, elektromagnetische Signale mit einer Frequenz von etwa 60 GHz und einer Wellenlänge im Bereich von etwa 5mm bei einer Bandbreite von etwa 4.0 GHz zu senden und zu empfangen. Dadurch wird eine HF-Funktechnik bereitgestellt, bei der die Genauigkeit zur Berechnung der Radarprofildaten erhöht ist.

Gegebenenfalls ist vorgesehen, dass der Abstand der Empfangseinheiten etwa die hälfte bis das zweifache der Wellenlänge, insbesondere 2.5 mm bis 10mm, bevorzugt 2.5 mm bis 5 mm, beträgt. Dadurch wird erreicht, dass die Messdaten besonders stark mit den Schneekorndurchmessern des Schneeprofils korrelieren. Schließlich kann auch vorgesehen sein, dass die Radareinheit zwei oder mehr, insbesondere versetzt angeordnete Sendeantennen und vorzugsweise vier oder mehr, insbesondere versetzt angeordnete Empfangsantennen umfasst. Dadurch wird eine Vorrichtung gebildet, die umfassendere Radarprofildaten generieren kann, um so die statistische Signifikanz des Schneeprofils zu erhöhen.

Weitere erfindungsgemäße Merkmale ergeben sich aus den Ansprüchen, den Figuren und der Beschreibung des Ausführungsbeispiels.

Die Erfindung wird nun anhand eines nicht ausschließlichen Ausführungsbeispiels näher erläutert. Es zeigen:
Fig. 1 eine schematische Darstellung des Datenflusses eines erfindungsgemäßen computerimplementierten Verfahrens und eine schematische Darstellung einer erfindungsgemäßen Vorrichtung zur Bestimmung der Zusammensetzung eines geschichteten Schneeprofils;
Fig. 2 eine exemplarische graphische Darstellung von Schneeprofildaten;
Figs. 3a - 3c schematische Darstellungen von erfindungsgemäßen Anordnungsmöglichkeiten von zumindest zwei örtlich getrennten Empfangsantennen.

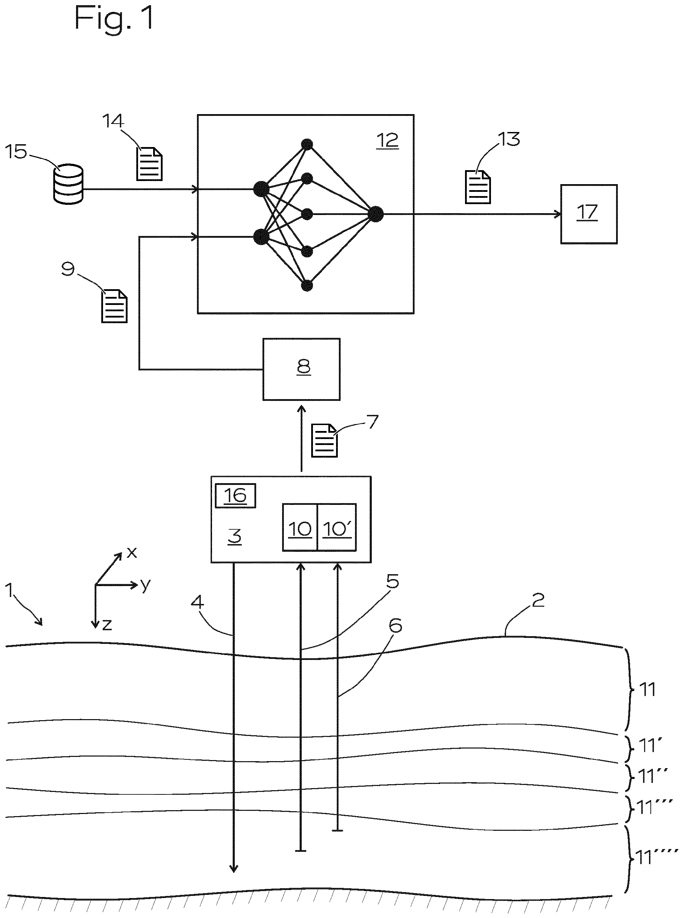

**Fig. 1** zeigt eine schematische Darstellung des Datenflusses eines erfindungsgemäßen computerimplementierten Verfahrens und eine schematische Darstellung einer erfindungsgemäßen Vorrichtung zur Bestimmung der Zusammensetzung eines geschichteten Schneeprofils 1. Das Schneeprofil 1 ist schichtweise strukturiert und in dieser Ausführungsform sind fünf exemplarische Schichten 11 - 11ʺʺ dargestellt. In anderen Anwendungsbeispielen kann das Schneeprofil 1 mehr als fünf Schichten 11 - 11ʺʺ oder auch weniger als fünf Schichten 11 - 11ʺʺ umfassen. Die dargestellte Schichtstruktur soll lediglich schematisch zeigen, dass ein Schneeprofil aus einer Vielzahl von Schichten gebildet sein kann, für die jeweils Daten Lk(z) bestimmt werden können.

Die vertikale Richtung betrifft die Tiefenrichtung des Schneeprofils und ist im dargestellten Koordinatensystem mit z bezeichnet. Jeder Schicht des Schneeprofils kann ein z-Wert zugewiesen werden, der der Tiefe des Schneeprofils entspricht. Die bestimmbaren Daten Lk(z) werden mit zugewiesenen z-Werten gebildet. Lk(z) bedeutet, dass k Labels (L) eines Schneeprofils in Abhängigkeit der Tiefe (z) gebildet werden. In diesem Ausführungsbeispiel ist k gleich 6, da L1 die Schneekorngröße, L2 die Kornform, L3 die Härte, L4 der Rammwiderstand, L5 die Temperatur und L6 der Feuchtegrad ist. Die Daten Lk(z) sind nicht zwingend numerische Daten, sondern können auch Symbole oder Strings sein. Die bestimmbaren Daten Lk(z) sind in diesem Ausführungsbeispiel die Schneeprofildaten 13 und können in anderen Ausführungsbeispielen auch die Radarprofildaten 9 sein. Die Probendaten 14 sind in diesem Ausführungsbeispiel gleichermaßen strukturiert wie die Schneeprofildaten 13. Die Radarmessdaten 7 sind gleichermaßen Daten, die zugewiesene z-Werte aufweisen, jedoch lediglich aus numerischen Daten bestehen.

Die oberste Schicht des Schneeprofils wird durch die Schneedecke 2 begrenzt. Über der Schneedecke 2 ist eine Radareinheit 3 angeordnet. In dieser Ausführungsform ist die Radareinheit 3 beabstandet zur Schneedecke 2 angeordnet, in anderen Ausführungsformen kann die Radareinheit 3 auch direkt auf der Schneedecke 2 aufliegen oder mit nur sehr kleinem zur Schneedecke 2 beabstandet sein.

Die Radareinheit 3 ist dazu ausgebildet, ein Sendesignal 4 in das Schneeprofil 1 zu senden. In anderen Ausführungsformen sendet die Radareinheit gegebenenfalls auch mehr als ein Sendesignal 4. Im Schneeprofil 1 wird das Sendesignal 4 reflektiert, gestreut und/oder gebeugt. Ferner ist die Radareinheit 3 auch mit einem GPS-Modul 16 ausgestattet, das die aktuelle geografische Position der Radareinheit 3 feststellt. Die Radareinheit 3 empfängt zwei Reflexionssignale 5, 6, die je einem reflektierten, gestreuten und/oder gebeugten Signal des Sendesignals 4 entsprechen. In anderen Ausführungsformen kann die Radareinheit 3 auch mehr als zwei Reflexionssignale 5, 6 empfangen. Die Radareinheit 3 bildet aggregierte Radarmessdaten 7, indem das Sendesignal 4 und die Reflexionssignale 5, 6 in einem gemeinsamen Datensatz zusammengefasst werden.

In anderen Ausführungsformen kann diese Zusammenfassung jedoch auch ausbleiben oder auch erst in einem späteren Verfahrensschritt erfolgen. In dieser Ausführungsform umfassen die aggregierten Radarmessdaten 7 allerdings auch die geografische Position des GPS-Moduls 16, die während der Radarmessung festgestellt wurde. Die aggregierten Radarmessdaten 7 werden von der Radareinheit 3 an eine Datenverarbeitungseinheit 8 übermittelt.

In anderen Ausführungsformen kann die Radareinheit 3 jedoch auch gemeinsam mit der Datenverarbeitungseinheit 8 gebildet sein. Die aggregierten Radarmessdaten 7 werden in der Datenverarbeitungseinheit 8 von digitalen Signalverarbeitungsalgorithmen verarbeitet und daraus schließlich Radarprofildaten 9 errechnet. Die Radarprofildaten 9 sind in dieser Ausführungsform entsprechend den extrahierten errechneten Schichten 11 strukturiert und in separate Schichten des Schneeprofils 1 gegliedert.

Danach werden die Radarprofildaten 9 an ein Neuronales Netz 12 weitergeleitet. Das Neuronale Netz 12 kann einerseits im Trainingsmodus und andererseits im operativen Modus arbeiten. Im Trainingsmodus werden die Radarprofildaten 9 und/oder die Probendaten 14 von einem Probendatenserver 15 abgerufen, um die internen Verkettungen und Gewichtungen des Neuronalen Netzes 12 zu modifizieren.
In dieser Ausführungsform sind die Probendaten 14 als Daten über die Kornform, die Härte, den Rammwiderstand, die Temperatur, den Feuchtegrad und/oder den durchschnittlichen Schneekorndurchmesser Schneeprofils 1 in Abhängigkeit der Tiefe und gegebenenfalls nach Schichten getrennt ausgebildet.

Im operativen Modus werden lediglich Radarprofildaten 9 dem Neuronalen Netz 12 bereitgestellt, um die Schneeprofildaten 13 zu errechnen und die Schneeprofildaten 13 zur Speicherung an einen Datenspeicher 17 weiterzuleiten. In anderen nicht dargestellten Ausführungsbeispielen kann das Neuronale Netz 12 auch gemeinsam mit der Datenverarbeitungseinheit 8 gebildet sein. In dieser Ausführungsform umfassen die Schneeprofildaten 13 Daten über die Kornform, die Härte, den Rammwiderstand, die Temperatur, den Feuchtegrad und/oder den durchschnittlichen Schneekorndurchmesser der extrahierten Schichten 11 des Schneeprofils 1.

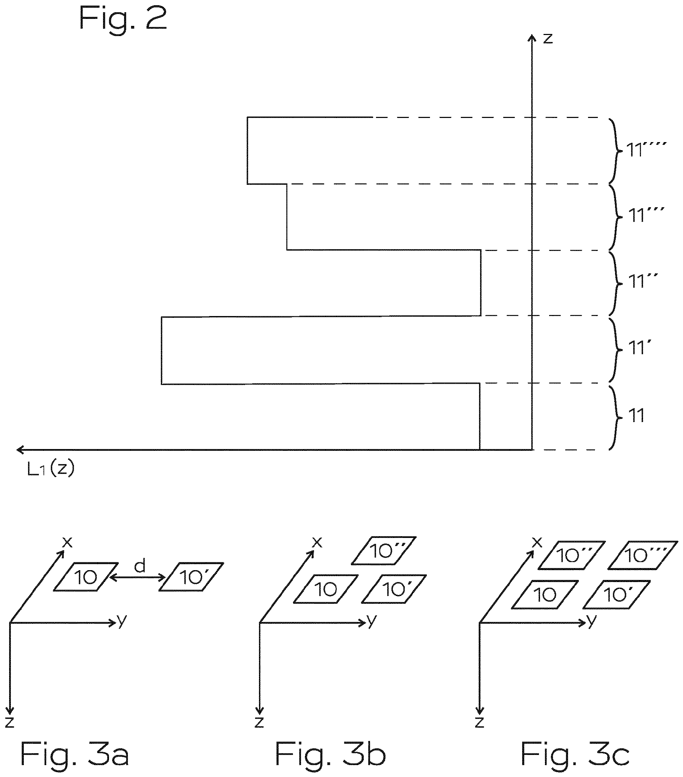

**Fig. 2** zeigt exemplarisch eine graphische Darstellung von Schneeprofildaten 13. Gemäß Fig. 1 umfassen die Schneeprofildaten 13 eine Vielzahl von Labels Lk, wobei in Fig. 2 das erste Label L1 exemplarisch dargestellt wird. L1 entspricht in dieser Ausführungsform der Schneekorngröße, wobei L₁(z) somit der Schneekorngröße in Abhängigkeit der Tiefe des Schneeprofils entspricht. Die Schneeprofildaten 13 umfassen für jede exemplarische Schicht 11 einen numerischen Wert für die Schneekorngröße dieser Schicht. Die Probendaten 13 sind in dieser Ausführungsform somit Daten, die für jede Schicht eines Schneeprofils k Strings oder Werte für die k Labels der Schichten umfassen.

**Figs. 3a** - **3c** zeigen schematische Darstellungen von erfindungsgemäßen Anordnungsmöglichkeiten von zumindest zwei örtlich getrennten Empfangsantennen 10. Das Koordinatensystem ist entsprechend dem Koordinatensystem der Fig. 1 aufzufassen. Fig. 3a zeigt ein Ausführungsbeispiel mit zwei Empfangsantennen 10, 10', wobei die beiden Empfangsantennen 10, 10' örtlich getrennt sind und entlang einer ersten Richtung, in diesem Ausführungsbeispiel die y-Richtung, um eine Abstand d von einander beabstandet sind.

Fig. 3b zeigt ein Ausführungsbeispiel mit drei Empfangsantennen 10, 10', 10", wobei die Empfangsantennen 10, 10', 10" örtlich getrennt sind und entlang einer ersten Richtung, in diesem Ausführungsbeispiel die y-Richtung, und entlang einer zweiten Richtung, in diesem Ausführungsbeispiel die x-Richtung, von einander beabstandet sind. Fig. 3c zeigt ein Ausführungsbeispiel mit vier Empfangsantennen 10, 10', 10", 10‴, wobei die Empfangsantennen 10, 10', 10", 10‴ örtlich getrennt sind und entlang einer ersten Richtung, in diesem Ausführungsbeispiel die y-Richtung, und entlang einer zweiten Richtung, in diesem Ausführungsbeispiel die x-Richtung, von einander beabstandet sind.

In anderen Ausführungsbeispielen können auch mehr Empfangsantennen vorgesehen sein und mit anderen Beabstandungen zueinander angeordnet sein. Die Schneeprofiltiefe verläuft in diesem Ausführungsbeispiel in die z-Richtung.

Die Erfindung beschränkt sich nicht auf die beschriebenen Ausführungsbeispiele, sondern umfasst auch weitere Ausführungen der vorliegenden Erfindung im Rahmen der nachfolgenden Patentansprüche.

### Bezugszeichenliste

- 1: Schneeprofil
- 2: Schneedecke
- 3: Radareinheit
- 4: Sendesignal
- 5: Erstes Reflexionssignal
- 6: Zweites Reflexionssignal
- 7: Radarmessdaten
- 8: Datenverarbeitungseinheit
- 9, 9': Radarprofildaten
- 10, 10': Empfangsantenne
- 11 - 11ʺʺ: Schichten
- 12: Neuronales Netz
- 13: Schneeprofildaten
- 14: Probendaten
- 15: Probendatenserver
- 16: GPS-Modul
- 17: Datenspeicher

## Patentansprüche

1. Computerimplementiertes Verfahren zur Bestimmung der Zusammensetzung eines geschichteten Schneeprofils (1) mit einer, über einer Schneedecke (2) angeordneten Radareinheit (3), umfassend die folgenden Schritte:
a. **Senden,** durch die Radareinheit (3), eines Sendesignals (4), in die Schneedecke (2),
b. **Empfangen,** durch die Radareinheit (3), eines ersten Reflexionssignals (5) und eines zweiten Reflexionssignals (6),
c. **Bilden,** durch die Radareinheit (3), von aggregierten Radarmessdaten (7) umfassend die Signale (4, 5, 6),
d. **Übermitteln,** durch die Radareinheit (3), der Radarmessdaten (7) an eine Datenverarbeitungseinheit (8),
e. **Berechnen,** durch Anwendung digitaler Signalverarbeitungsalgorithmen in der Datenverarbeitungseinheit (8), von Radarprofildaten (9) aus den Radarmessdaten (7),
f. **Bestimmen,** durch die Datenverarbeitungseinheit (8), der Zusammensetzung des Schneeprofils (1) auf Grundlage der Radarprofildaten (9),
**dadurch gekennzeichnet, dass**
die Reflexionssignale (5, 6) gleichzeitig durch zumindest drei örtlich getrennte Empfangsantennen (10, 10', 10") empfangen werden, die entlang einer ersten Richtung, insbesondere der x-Richtung, und entlang einer zweiten Richtung, insbesondere der y-Richtung, voneinander beabstandet sind.

2. Verfahren nach Anspruch 1, **dadurch gekennzeichnet, dass** die Datenverarbeitungseinheit (8) aus den Radarmessdaten (7) separate Schichten (11, 11', 11", 11‴, 11ʺʺ) des Schneeprofils (1) extrahiert und die Radarprofildaten (9) entsprechend der extrahierten Schichten (11, 11', 11", 11‴, 11ʺʺ) in Abschnitte gliedert.

3. Verfahren nach Anspruch 1 oder 2, **dadurch gekennzeichnet, dass** die Bestimmung der Zusammensetzung des Schneeprofils (1) durch ein Neuronales Netz (12) erfolgt, wobei das Neuronale Netz (12) auf Grundlage der Radarprofildaten (9) korrespondierende, insbesondere geschichtete Schneeprofildaten (13) des Schneeprofils (1) liefert.

4. Verfahren nach Anspruch 3, **dadurch gekennzeichnet, dass** zum Trainieren des Neuronalen Netzes (12) Probendaten (14) bekannter Schneeprofile (1) in Verbindung mit Radarprofildaten (9') dieser bekannten Schneeprofile (1) als Trainingsdaten verwendet werden, wobei die Probendaten (14) vorzugsweise von einem externen Probendatenserver (15) abgerufen werden.

5. Verfahren nach Anspruch 4, **dadurch gekennzeichnet, dass** die Probendaten (14) und die Schneeprofildaten (13) Daten über die Kornform, die Härte, den Rammwiderstand, die Temperatur, den Feuchtegrad und/oder den durchschnittlichen Schneekorndurchmesser der Schichten (11, 11', 11", 11‴, 11ʺʺ) des Schneeprofils (1) umfassen.

6. Verfahren nach Anspruch 4 oder 5, **dadurch gekennzeichnet, dass** die Datenverarbeitungseinheit (8) durch Abfrage eines Positionssensors, vorzugsweise eines GPS-Moduls (16), ihre aktuelle geographische Position feststellt, worauf die Probendaten (14) für diese Position abgerufen werden.

7. Computerlesbares Speichermedium, umfassend Anweisungen, die einen Computer zur Ausführung eines Verfahrens nach einem der Ansprüche 1 bis 6 veranlassen.

8. **Vorrichtung** zur Bestimmung der Zusammensetzung eines geschichteten Schneeprofils (1), umfassend eine, über einer Schneedecke (2) angeordnete Radareinheit (3) und eine Datenverarbeitungseinheit (8), wobei
a. die Radareinheit (3) ausgebildet ist, ein Sendesignal (4) in die Schneedecke (2) zu senden, ein erstes Reflexionssignal (5) und ein zweites Reflexionssignal (6) zu empfangen, aggregierte Radarmessdaten (7) umfassend die Signale (4, 5, 6) zu bilden, und die Radarmessdaten (7) an die Datenverarbeitungseinheit (8) zu übermitteln, und
b. die Datenverarbeitungseinheit (8) dazu ausgebildet ist, durch Anwendung digitaler Signalverarbeitungsalgorithmen Radarprofildaten (9) aus den Radarmessdaten (7) zu berechnen, und die Zusammensetzung des Schneeprofils (1) auf Grundlage der Radarprofildaten (9) zu bestimmen,
**dadurch gekennzeichnet, dass**
die Radareinheit (3) zumindest drei örtlich getrennte Empfangsantennen (10, 10', 10") aufweist, um die Reflexionssignale (5, 6) gleichzeitig zu empfangen, wobei die Empfangsantennen (10, 10', 10") entlang einer ersten Richtung, insbesondere der x-Richtung, und entlang einer zweiten Richtung, insbesondere der y-Richtung, voneinander beabstandet sind.

9. Vorrichtung nach Anspruch 8, **dadurch gekennzeichnet, dass** die Datenverarbeitungseinheit (8) dazu ausgebildet ist, aus den Radarmessdaten (7) separate Schichten (11, 11', 11", 11", 11"") des Schneeprofils (1) zu extrahieren und die Radarprofildaten (9) entsprechend der extrahierten Schichten (11, 11', 11", 11‴, 11"") in Abschnitte zu gliedern.

10. Vorrichtung nach Anspruch 8 oder 9, **dadurch gekennzeichnet, dass** die Datenverarbeitungseinheit (8) mit einem Neuronalen Netz (12) in Verbindung steht oder dieses umfasst, wobei das Neuronale Netz (12) dazu trainiert ist, auf Grundlage der Radarprofildaten (9) korrespondierende, insbesondere geschichtete Schneeprofildaten (13) des Schneeprofils (1) zu liefern.

11. Vorrichtung nach Anspruch 10, **dadurch gekennzeichnet, dass** die Datenverarbeitungseinheit (8) mit einem vorzugsweise externen Probendatenserver (15) in Verbindung steht und dazu ausgebildet ist, Probendaten (14) bekannter Schneeprofile (1) vom Probendatenserver (15) abzurufen und in Verbindung mit Radarprofildaten (9, 9') dieser bekannten Schneeprofile (1) zum Trainieren des Neuronalen Netzes (12) zu verwenden.

12. Vorrichtung nach Anspruch 11, **dadurch gekennzeichnet, dass** die Probendaten (14) und die Schneeprofildaten (13) Daten über die Kornform, die Härte, den Rammwiderstand, die Temperatur, den Feuchtegrad und/oder den durchschnittlichen Schneekorndurchmesser der Schichten (11, 11', 11", 11‴, 11"") des Schneeprofils (1) umfassen.

13. Vorrichtung nach Anspruch 11 oder 12, **dadurch gekennzeichnet, dass** die die Datenverarbeitungseinheit (8) mit einem Positionssensor, insbesondere mit einem GPS-Modul (16), in Verbindung steht und dazu ausgebildet ist, ihre aktuelle geographische Position festzustellen und die Probendaten (14) für diese Position abzurufen.

14. Vorrichtung nach einem der Ansprüche 8 bis 13, **dadurch gekennzeichnet, dass** die Radareinheit (3) dazu ausgebildet ist, elektromagnetische Signale mit einer Frequenz bis zu etwa 60 GHz, bevorzugt im Bereich 24 GHz oder 60 GHz, bei einer Bandbreite von etwa 4.0 GHz zu senden und zu empfangen.

15. Vorrichtung nach Anspruch 14, **dadurch gekennzeichnet, dass** der Abstand der Empfangseinheiten (10, 10') etwa die hälfte bis das zweifache der Wellenlänge des Sendesignals (4) beträgt.

16. Vorrichtung nach einem der Ansprüche 8 bis 15, **dadurch gekennzeichnet, dass** die Radareinheit (3) zwei oder mehr, insbesondere versetzt angeordnete Sendeantennen und vorzugsweise vier oder mehr, insbesondere versetzt angeordnete Empfangsantennen (10, 10') umfasst.

17. Vorrichtung nach einem der Ansprüche 8 bis 16, **dadurch gekennzeichnet, dass** die Empfangsantennen (10, 10') auf einer Ebene angeordnet sind, die im Wesentlichen parallel zu den Schichten (11, 11', 11", 11", 11"") des Schneeprofils (1) ist.
